# EUROPEAN PATENT SPECIFICATION

(11) **EP 3 502 866 B1**
(45) Date of publication and mention of the grant of the patent: **21.12.2022**
(21) Application number: 18180858.5
(22) Date of filing: 29.06.2018
(51) Int. Cl.: G06V 20/70, G06V 20/10

(54) **SYSTEMS AND METHODS FOR AUDIO-BASED AUGMENTED REALITY**
SYSTEME UND VERFAHREN FÜR AUDIOBASIERTE ERWEITERTE REALITÄT
SYSTÈMES ET PROCÉDÉS POUR UNE RÉALITÉ AUGMENTÉE À BASE AUDIO

(30) Priority: 21.12.2017 US 201715850190; 08.02.2018 WO PCT/US2018/017426
(43) Date of publication of application: 26.06.2019
(73) Proprietor: Meta Platforms, Inc., Menlo Park, CA 94025 (US)
(72) Inventor: VISHWANATHAN, Vignesh, Menlo Park, CA California 94025 (US); MURRELL, Tullie, Menlo Park, CA California 94025 (US)
(74) Representative: Murgitroyd & Company

(56) References cited:
- WO-A1-2015/102904
- US-A1- 2015 302 663
- US-A1- 2016 378 861
- US-A1- 2017 046 613
- FLAVIO RIBEIRO ET AL: "Auditory augmented reality: Object sonification for the visually impaired", MULTIMEDIA SIGNAL PROCESSING (MMSP), 2012 IEEE 14TH INTERNATIONAL WORKSHOP ON, IEEE, 17 September 2012 (2012-09-17), pages 319-324, XP032468138, DOI: 10.1109/MMSP.2012.6343462 ISBN: 978-1-4673-4570-5
- Tapio Lokki ET AL: "Audio Engineering Society Convention Paper 6026 Application Scenarios of Wearable and Mobile Augmented Reality Audio", AES 116 TH CONVENTION, 8 May 2004 (2004-05-08), 11 May 2004 (2004-05-11), pages 1-9, XP55115012, Retrieved from the Internet: URL:http://www.acoustics.hut.fi/~mak/PUB/A ES_Lokki04.pdf [retrieved on 2014-04-23]

## Description

### FIELD OF THE INVENTION

The present technology relates to the field of computerized augmented reality (AR). More particularly, the present technology relates to techniques for providing audio-based AR. The present technology also relates to a computer-implemented method and a system and storage media, in particular for providing audio-based AR.

### BACKGROUND

Users often utilize computing devices for a wide variety of purposes. For example, users can use their computing devices to interact with one another, access content, share content, and create content. Users can also utilize their computing devices for AR. By utilizing their computing devices for AR, the users can experience computer-generated elements which complement real world phenomena. For example, via AR, a user might perceive a playable, computer-generated chessboard to exist on his or her real-world desk. As another example, via AR, a user might perceive an arrow to be floating over a sidewalk, and pointing to a recommended restaurant. In conventional techniques, AR tends to be wholly or mostly of a visual nature.

US2016/378861 discloses a computing system including a vision-based user interface platform to, among other things, analyze multi-modal user interactions, semantically correlate stored knowledge with visual features of a scene depicted in a video, determine relationships between different features of the scene, selectively display virtual elements on the video depiction of the scene and/or answer spoken question of the user with overlays or synthesized speech.

Flavio Ribeiro et al. "Auditory augmented reality: Objects sonification for the visually impaired", Multimedia signal processing (MMSP), 2012, IEEE 14th international workshop, p 319-324, discloses a device and a method for plan decomposition, floorplan estimation an d face detection. Virtual acoustic objects may be placed in real world coordinates.

US 2015/0302663 A1 discloses an augmented reality display system. The system may comprise recognizing an object by and object recognizer. In the system audio objects may be associated with virtual objects. The method may comprise selecting another sound data to accompany the predetermined sound data for the audio object based at least in part on the determined perceived location of the audio object in relation to the determined head pose of the user. In one or more embodiments, the method further comprises using the audio object to trigger a head movement of the user. It further discloses that the user interface of the AR system may be responsive to voice, for instance spoken commands.

### SUMMARY

According to the present invention there is provided a computer-implemented method according to claim 1. Various embodiments of the present disclosure can include systems, methods, and non-transitory computer readable media configured to receive a user request to identify at least one object of an environment in which a computing device is situated. A classification for the at least one object can be received. Subsequently, an audio tag based on the classification for the at least one object can be placed in a representation of the environment. The audio tag can be associated with a sound perceived by a user to be emanating from the at least one object. A spoken question regarding the at least one object of the environment can be received by an audio AR interaction module of the computing device. Subsequently, an answer to the question can be generated based on one or more of a cascade of machine learning models or a knowledge base graph and based on the answer, replacing the audio tag by a second audio tag associated with a sound perceived by a user to be emanating from the at least one object.

In an embodiment, the sound perceived by the user can be generated based on a location and an orientation of the user device.

In an embodiment, sound wave propagation within the representation of the environment in which the computing device is situated can be modeled. Subsequently, audio spatialization data can be generated based on the modeling of the sound wave propagation.

In an embodiment, the sound perceived by the user can be generated based on the audio spatialization data.

In an embodiment, one or more captured images of the environment in which the computing device is situated can be received. Sensor data can be received from one or more sensors of the computing device. Subsequently, the representation of the environment in which the computing device is situated can be generated based on the one or more captured images and the sensor data.

In an embodiment, the one or more sensors can include one or more of accelerometers, gyroscopes, or magnetometers.

In an embodiment, the representation of the environment in which the computing device is situated can be a sparse three-dimensional map representation.

In an embodiment, a location of the computing device within the environment in which the computing device is situated can be tracked.

In an embodiment, receiving a classification for the at least one object can further comprise accessing one or more machine learning models of a cascade of machine learning models.

A question regarding an object of the environment can be received. Subsequently, an answer to the question can be generated based on one or more of a cascade of machine learning models or a knowledge base graph.

Embodiments according to the invention are in particular disclosed in the attached claims, wherein any feature mentioned in one claim category, e.g. method, can be claimed in another claim category, e.g. system, computer program product, as well. The dependencies or references back in the attached claims are chosen for formal reasons only.

It should be appreciated that many other features, applications, embodiments, and/or variations of the disclosed technology will be apparent from the accompanying drawings and from the following detailed description. Additional and/or alternative implementations of the structures, systems, non-transitory computer readable media, and methods described herein can be employed without departing from the principles of the disclosed technology.

### BRIEF DESCRIPTION OF THE DRAWINGS

- **FIGURE 1**: illustrates an example system including an example audio AR module, according to an embodiment of the present disclosure.
- **FIGURE 2**: illustrates an example of an audio tagging module, according to an embodiment of the present disclosure.
- **FIGURE** 3: illustrates an example of an audio AR interaction module, according to an embodiment of the present disclosure.
- **FIGURE 4A**: illustrates an example implementation, according to an embodiment of the present disclosure.
- **FIGURE 4B**: illustrates an example of a device that can be utilized in various scenarios, according to an embodiment of the present disclosure.
- **FIGURE 4C**: illustrates an example machine learning model cascade, according to an embodiment of the present disclosure.
- **FIGURE 5**: illustrates an example partial process, according to an embodiment of the present invention.
- **FIGURE 6**: illustrates a network diagram of an example system including an example social networking system that can be utilized in various scenarios, according to an embodiment of the present disclosure.
- **FIGURE 7**: illustrates an example of a computer system or computing device that can be utilized in various scenarios, according to an embodiment of the present disclosure.

The figures depict various embodiments of the disclosed technology for purposes of illustration only, wherein the figures use like reference numerals to identify like elements. One skilled in the art will readily recognize from the following discussion that alternative embodiments of the structures and methods illustrated in the figures can be employed without departing from the principles of the disclosed technology described herein.

### DETAILED DESCRIPTION

### APPROACHES FOR AUDIO-BASED AUGMENTED REALITY

Users often utilize computing devices for a wide variety of purposes. For example, users can use their computing devices to interact with one another, access content, share content, and create content. Users can also utilize their computing devices for AR. By utilizing their computing devices for AR, the users can experience computer-generated elements which complement real world phenomena. For example, via AR, a user might perceive a playable, computer-generated chessboard to exist on his or her realworld desk. As another example, via AR, a user might perceive an arrow to be floating over a sidewalk, and pointing to a recommended restaurant. In conventional techniques, AR tends to be wholly or mostly of a visual nature.

A user typically utilizes a display of his or her user device to experience AR. For instance, a user might make use of a camera and a touchscreen of his or her smartphone to utilize AR. Such a user is typically tasked with simultaneously looking at the touchscreen and aiming the camera at an area of interest. However, such interaction can be difficult and, in some cases, dangerous. According to some conventional approaches, a camera and a display that are head mounted might be used instead. While these approaches may moderate some disadvantages of a smartphone camera and touchscreen, they present many of their own disadvantages. For example, a head-mounted display can be costly, fragile, or unwieldy. As another example, a head-mounted display may not be appropriate for all circumstances, for instance those which call for a user's undivided visual attention. Further still, a user who is visually impaired may find visually-based AR approaches difficult or impossible to use.

Due to these or other concerns, the aforementioned and other conventional approaches specifically arising in the realm of computer technology can be disadvantageous or problematic. Therefore, an improved approach can be beneficial for addressing or alleviating various drawbacks associated with conventional approaches. Based on computer technology, the disclosed technology can allow audio-based AR to be provided to users in an effective manner. In some embodiments, a user device can apply Simultaneous Localization and Mapping (SLAM) approaches to generate a representation of an environment in which the user device is situated. Depending on the implementation, the user device can include one or more of a camera, a microphone, a speaker, and a mount. The user device receives a user request to place (or position) audio tags for objects which exist in the environment. In response, the user device can use one or more machine learning models to receive classifications for the objects. For example, where a dog is present in the environment, the one or more machine learning models can generate a classification of "dog" for the dog. Likewise, where a cat is present in the environment, the one or more machine learning models can generate a classification of "cat" for the cat. Other objects can be classified in this way.

Subsequently, the user device places audio tags for the objects which have been classified. An audio tag for a given object is associated with a sound which is heard by a user of the user device, as if it were emanating from the object. As an example, the user device can place an audio tag for the dog using the spoken word "dog." The spoken word is heard by the user as if it were emanating from the dog. As another example, the user device can place an audio tag for the cat using a "meowing" sound. The meowing sound is heard by the user as if it were emanating from the cat. Placement of the audio tags can include the user device using audio spatialization approaches. These audio spatialization approaches can include modeling sound wave propagation with respect to the generated representation of the environment.

Further, the user device allows a user to speak questions regarding the objects. The user device can generate spoken answers to the questions. In generating the answers, the user device can use one or more machine learning models and/or one or more knowledge base graphs. More details regarding the discussed technology are provided herein.

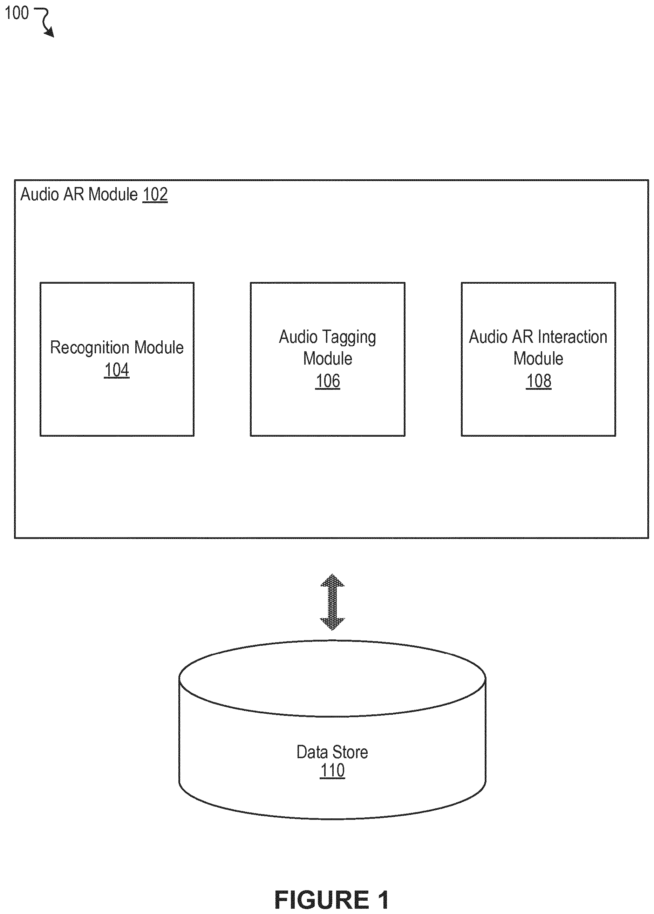

**FIGURE 1** illustrates an example system 100 including an example audio AR module 102, according to an embodiment of the present disclosure. As shown in the example of **FIGURE 1****,** the audio AR module 102 can include a recognition module 104, an audio tagging module 106, and an audio AR interaction module 108. In some instances, the example system 100 can include at least one data store 110. The components (e.g., modules, elements, etc.) shown in this figure and all figures herein are exemplary only, and other implementations can include additional, fewer, integrated, or different components. Some components may not be shown so as not to obscure relevant details. In some embodiments, the audio AR module 102 can be implemented in a system, such as a social networking system. While the disclosed technology may be described herein in connection with a social networking system for illustrative purposes, the disclosed technology can be implemented in any other type of system or environment.

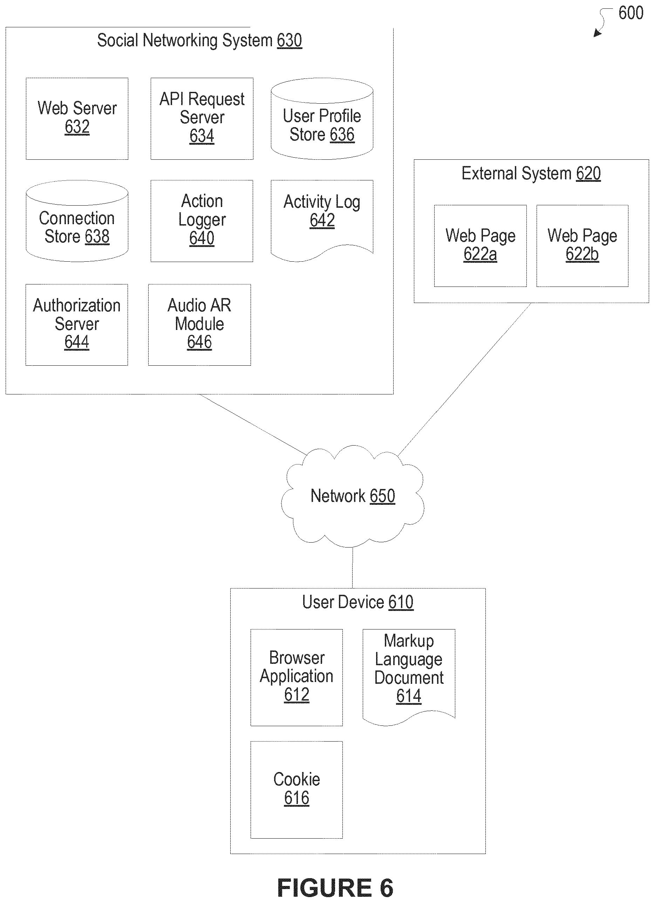

In some embodiments, the audio AR module 102 can be implemented, in part or in whole, as software, hardware, or any combination thereof. In general, a module as discussed herein can be associated with software, hardware, or any combination thereof. In some implementations, one or more functions, tasks, and/or operations of modules can be carried out or performed by software routines, software processes, hardware, and/or any combination thereof. In some cases, the audio AR module 102 can be implemented, in part or in whole, as software running on one or more computing devices or systems. For example, the audio AR module 102 or at least a portion thereof can be implemented using one or more computing devices or systems that include one or more servers, such as network servers or cloud servers. In another example, the audio AR module 102 or at least a portion thereof can be implemented as or within an application (e.g., app), a program, an applet, or an operating system, etc., running on a user computing device or a client computing system, such as a user device 610 of **FIGURE 6****.** In some instances, the audio AR module 102 can, in part or in whole, be implemented within or configured to operate in conjunction with a system (or service), such as a social networking system 630 of **FIGURE 6****.** The application incorporating or implementing instructions for performing functionality of the audio AR module 102 can be created by a developer. The application can be provided to or maintained in a repository. In some cases, the application can be uploaded or otherwise transmitted over a network (e.g., Internet) to the repository. For example, a computing system (e.g., server) associated with or under control of the developer of the application can provide or transmit the application to the repository. The repository can include, for example, an "app" store in which the application can be maintained for access or download by a user. In response to a command by the user to download the application, the application can be provided or otherwise transmitted over a network from the repository to a computing device associated with the user. For example, a computing system (e.g., server) associated with or under control of an administrator of the repository can cause or permit the application to be transmitted to the computing device of the user so that the user can install and run the application. The developer of the application and the administrator of the repository can be different entities in some cases, but can be the same entity in other cases. It should be understood that there can be many variations or other possibilities.

The audio AR module 102 can be configured to communicate and/or operate with the at least one data store 110, as shown in the example system 100. The at least one data store 110 can be configured to store and maintain various types of data. For example, the data store 110 can store information used or generated by the audio AR module 102. The information used or generated by the audio AR module 102 can include, for example, machine learning model persistence data, Simultaneous Localization and Mapping (SLAM) data, audio spatialization data, tag placement data, and knowledge base data. In some implementations, the at least one data store 110 can store information associated with the social networking system (e.g., the social networking system 630 of **FIGURE 6****).** The information associated with the social networking system can include data about users, social connections, social interactions, locations, geo-fenced areas, maps, places, events, pages, groups, posts, communications, content, feeds, account settings, privacy settings, a social graph, and various other types of data. In some implementations, the at least one data store 110 can store information associated with users, such as user identifiers, user information, profile information, user specified settings, content produced or posted by users, and various other types of user data.

The recognition module 104 can access an image or a plurality of images (video). An image can depict a scene and one or more objects. As an illustration, the scene might be a marketplace, and the objects might include a person, a dog, and flowers. The image can be captured by a camera of a user device. For example, the image can be from a video that is being captured by the camera of the user device. The image can be in any format supporting various types of user experience, including a two-dimensional (2D) image, a 2D video, a 360 photo, a 360 video, virtual reality (VR), to name some examples. The recognition module 104 can classify the scene. The recognition module 104 can also detect and classify the objects depicted in the scene. The recognition module 104 can use one or more machine learning models in performing the detection and the classification. The detection can include generating information which indicates where in the image the detected objects are depicted. In some embodiments, the one or more machine learning models can include convolutional neural networks (CNNs) which are capable of both detection and classification. In some embodiments, the one or more machine learning models can include CNNs which perform classification but not detection. Many variations are possible.

In some embodiments, the CNNs can include one or more CNNs arranged in a cascade. In some embodiments, the cascaded CNNs can be. As an illustration, a first of the cascaded CNNs can classify a scene or an object(s) depicted therein as belonging to a generalized class. Other CNNs of the cascade can be used to classify the scene or the object as belonging to one or more progressively specific classes of the generalized class. As one illustration, a first of cascaded CNNs can classify a scene as being a city scene. A second of the cascaded CNNs can classify the scene as being a marketplace. A third of the cascaded CNNs can classify the scene as being a farmers' market. A fourth of the cascaded CNNs can classify the scene as being the San Francisco Ferry Plaza Farmers' Market. As another illustration, a first of the CNNs of the cascade can classify one of the objects as being an animal. A second of the CNNs of the cascade can classify the object as being a dog. A third of the CNNs of the cascade can classify the object as being a Scottish Terrier.

In some embodiments, a first CNN of the cascade can be a CNN which performs both detection and classification, while lower-level CNNs of the cascade can be CNNs which perform classification but not detection. Also, in some embodiments, certain of the CNNs of the cascade can be located on a user device, while other CNNs of the cascade can be located on a server in communication with the user device. For example, one or more higher-level CNNs of the cascade can be located on the user device, while lower-level CNNs of the cascade can be located on the server. In these embodiments, more general classifications can be performed using the user device. Then, if finer-grained classification is desired, the CNNs on the server can be used. Many variations are possible.

The recognition module 104 can classify an object of an image, or a scene of the image, according to one or more identity classes, one or more action classes, and/or one or more property classes. The identity classes can include classes which relate to people, places, and things. As illustrations, the classes relating to people can include "person," "woman," and "Rhonda." As further illustrations, the classes relating to places can include "city scene," "marketplace," "farmers' market," and "San Francisco Ferry Plaza Farmers' Market." As further illustrations, the classes relating to things can include "laptop," "MacBook," "animal," "dog," and "Scottish Terrier." The action classes can include, as illustrations, "moving," "jogging," "flying," "speaking," and "shouting." The property classes can include, as illustrations, "wet," "soaked," "blue," and "azure."

In some embodiments, multiple CNNs or other machine learning models which provide complementary or non-overlapping classifications can be used. As an example, there can be one or more CNNs which classify according to the identity classes. In this example, there can be one or more further CNNs which classify according to the action classes. Further in this example, there can be one or more additional CNNs which classify according to the property classes. As an illustration, one of the identity class CNNs can be capable of classifying objects depicted in images as dogs, cats, bears, or elephants. In this illustration, one of the property class CNNs can be capable of classifying objects depicted in images as being wet or dry. Further in this illustration, an image depicting a wet dog can be correctly classified by passing it to each of the identity class CNN and the property class CNN. In particular, the identity class CNN can correctly classify the image as depicting a dog, while the property class CNN can correctly classify the image as depicting a wet item. Taken together, the results of the two CNNs can correctly identify the wet dog of the image. As another illustration, a further property class CNN can be capable of classifying objects depicted in images as being small, medium, or large. In this illustration, an image depicting a baby elephant can be correctly classified by passing it to the identity class CNN and the further property class CNN. In particular, the identity class CNN can correctly classify the image as depicting an elephant, and the further property class CNN can correctly classify the image as depicting a small item. Taken together, the two CNNs can correctly identify the baby elephant of the image as a "small elephant." Many variations are possible.

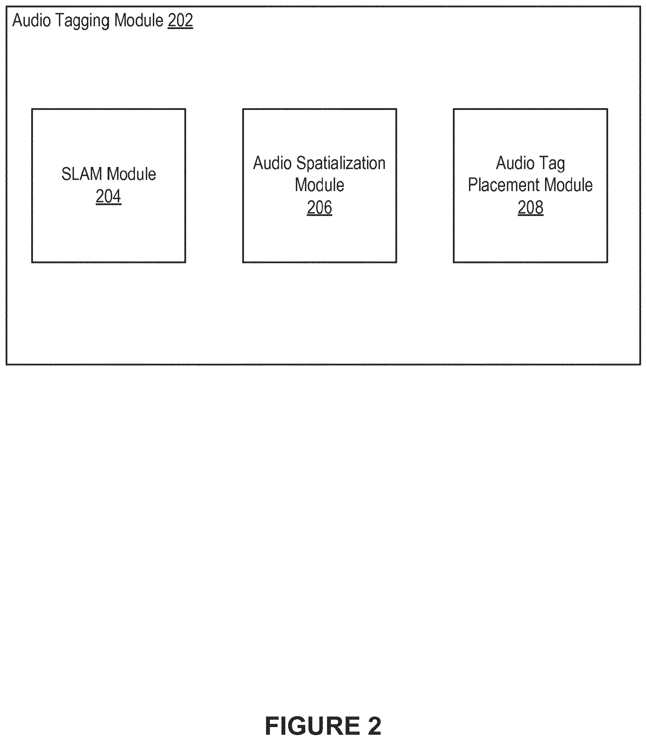

The audio tagging module 106 can create a representation of an environment, and can track a location of the user device within the environment. The audio tagging module 106 can also generate audio spatialization data for the environment. Further, the audio tagging module 106 can place audio tags within the environment. The audio tagging module 106 can be used when generating audio tags for objects of the environment. Additional details regarding the audio tagging module 106 are provided below with reference to **FIGURE 2****.**

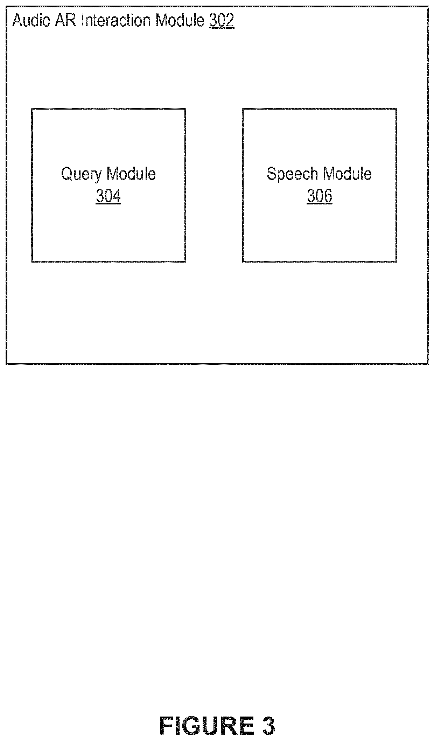

The audio AR interaction module 108 can receive questions regarding objects and generate replies or responses to the questions. The audio AR interaction module 108 can also communicate with a user based on speech recognition techniques. In some embodiments, the user can be a visually impaired person. The audio AR interaction module 108 can be used when providing an audio AR experience to the user. Additional details regarding the audio AR interaction module 108 are provided below with reference to **FIGURE 3.**

**FIGURE 2** illustrates an example audio tagging module 202, according to an embodiment of the present disclosure. In some embodiments, the audio tagging module 106 of **FIGURE 1** can be implemented as the example audio tagging module 202. As shown in **FIGURE 2****,** the audio tagging module 202 can include a SLAM module 204, an audio spatialization module 206, and an audio tag placement module 208.

The SLAM module 204 can generate a sparse three-dimensional (3D) map representation of an environment in which a user device is situated. The SLAM module 204 can also track a location of the user device within the environment. The SLAM module 204 can employ conventional SLAM techniques in generating the sparse 3D map representation and in tracking the user device, as discussed below.

In some embodiments, the SLAM module 204 can receive two-dimensional (2D) images captured at various points in time. For each of the points in time, the SLAM module 204 can also receive sensor data read at that point in time. The 2D images can be captured by a camera of the user device. The sensor data can be read from sensors of the user device. The sensors of the user device can include accelerometers, gyroscopes, and magnetometers. The images and the sensor data can be obtained as a user of the user device performs one or more sweeping motions. As such, the 2D images received by the SLAM module 204 can depict multiple portions of the environment.

The SLAM module 204 can utilize the 2D images and the sensor data to create a sparse 3D map representation of the environment. In some embodiments, the sparse 3D map representation of the environment can reflect only a portion of the environment. In constructing the sparse 3D map representation of the environment, the SLAM module 204 can select keyframes from the 2D images. The keyframes can be selected based on criteria. As an example, a 2D image captured after the user device has moved d units of distance can be selected as a keyframe. As another example, a 2D image captured after t units of time has elapsed can be selected as a keyframe. Further, the SLAM module 204 can extract feature points from each of the keyframes. As an example, the feature points can correspond to corners of the keyframe. The SLAM module 204 can store the feature points of the keyframe as a binary feature descriptor. Subsequently, the SLAM module 204 can attempt to match the binary descriptor for the keyframe against binary descriptors which have been stored for feature points of others of the keyframes. When a match is found, the SLAM module 204 can determine positions in in 3D space for the matched feature points. For example, the SLAM module 204 can use triangulation and/or geometric calculations in determining the positions in 3D space. By determining positions in 3D space for the feature points of multiple keyframes, the SLAM module 204 can complete a sparse 3D map representation of the environment. In some embodiments, the feature points of the keyframes can be recognized within those of the 2D images which are not keyframes. In these embodiments, the SLAM module 204 can use the recognition of the feature points to facilitate tracking a location and orientation of the user device. Further in these embodiments, the SLAM module 204 can use the recognition of the feature points to facilitate the discussed matching.

In some embodiments, the SLAM module 204 can utilize the 2D images and the sensor data to construct 3D images. For example, the SLAM module 204 can find pairs of the 2D images which overlap one another to a predetermined degree. The SLAM module 204 can calculate or construct a 3D image from each such pair by an approach which includes using the sensor data to determine a lateral shift of the user device between capturing the first image of the pair and the second image of the pair. Moreover, in some embodiments the SLAM module 204 can assemble the constructed 3D images to form a 3D panorama of the environment. Assembling the 3D images to form the 3D panorama can include utilizing photo stitching techniques. The 3D panorama can be, for example, a cylindrical or spherical panorama. In some embodiments, the 3D panorama can be an incomplete 3D panorama which reflects only a portion of the environment.

In embodiments where the 3D panorama is formed, when creating the sparse 3D map representation, the SLAM module 204 can maintain alignment between the 3D panorama and the sparse 3D map representation. As a result, portions of the 3D panorama can become aligned with their associated portions of the sparse 3D map representation. Moreover, in some embodiments the SLAM module 204 can utilize one or more machine learning models to detect and classify one or more surface materials within the 3D panorama. As illustrations, the SLAM module 204 can classify various of the surface materials as being wood, glass, metal, sheetrock, or foam. Subsequently, the SLAM module 204 can associate portions of the sparse 3D map representation with indications of surface materials to account for sound wave propagation, as discussed in more detail herein.

In some embodiments, the SLAM module 204 can track a location and an orientation of the user device in the environment. In some embodiments, only one of the location and the orientation can be tracked. The SLAM module 204 can receive readings from sensors of the user device as the user device moves through the environment. The SLAM module 204 can use these sensor readings to track the location and translation of the user device. Tracking the location of the user device can include tracking a position at which the user device is located. As one illustration, the position at which the user device is located can be tracked using accelerometer data. In this way, translation of the user device can be tracked. The SLAM module 204 also can track a direction in which the user device is facing. In this way, rotation of the user device can be tracked. As one illustration, the direction in which the user device is facing can be tracked using gyroscope and/or magnetometer data. Many variations are possible.

The audio spatialization module 206 can generate audio spatialization data which can be used to cause a sound to be perceived as being emitted from a particular location within an environment. The audio spatialization module 206 can receive a specification of a location within the environment from which a sound should be emitted. The audio spatialization module 206 can also receive a specification of a location and an orientation of the user device within the environment. The audio spatialization module 206 can use the received specifications, and the sparse 3D map representation, to generate audio spatialization data. The audio spatialization data can characterize how sound waves, emitting from the specified sound emission location, would be received by two ears of a person situated at the specified location with the specified orientation of the user device. The characterization can cause distant sounds to be perceived by the user as being further away. Likewise, the characterization can cause close sounds to be perceived by the user as being more near. For instance, closer sounds can seem louder, and farther sounds can seem quieter. As an example, the volume of the sound may be proportional to the distance between the specified sound emission location, and the specified location of the user device within the environment. Application of the audio spatialization data to a sound can cause the sound to be heard as if it were emerging from the specified location. In some embodiments, the audio spatialization data can be in the form of an impulse response. Many variations are possible.

The audio spatialization module 206 can use conventional audio spatialization techniques in generating the audio spatialization data. The conventional audio spatialization techniques can include modeling propagation of sound waves within an environment. In particular, the modeling can consider a sound source to be placed at a specified sound emission location. The modeling can also consider a human head with two ears to be situated at a specified user device location, and facing in a specified direction. The modeling of the propagation of the sound waves, and their receipt at the two ears, can take into account a number of factors. For instance, absorptions, reflections, and scatterings of the sound waves within the sparse 3D map representation, the head, and the ears can be modeled. Where the sparse 3D map representation includes corresponding data regarding surface materials, the modeling can take these surface materials into account. As an illustration, modeling absorption, reflection, and/or scattering off of a wood surface in an environment would differ from modeling absorption, reflection, and/or scattering off of a glass surface in the environment. Many variations are possible.

The audio tag placement module 208 can place audio tags for objects which exist in an environment in which a user device associated with a user is situated. The audio tags can be sounds associated with the objects which can be heard by the user as if the sounds were emanating from their respective objects. Each of the objects can be perceived by the user to be generating the sound of its respective audio tag.

When a user device is in an environment, a camera of the user device can capture one or more images of the environment. The audio tag placement module 208 can access the captured images. The audio tag placement module 208 can use the recognition module 104 to detect one or more objects depicted in an image. In some embodiments, the audio tag placement module 208 can receive from the recognition module 104 an indication of the locations of the detected objects within the image. The audio tag placement module 208 can also receive from the recognition module 104 one or more classifications for the detected objects. The audio tag placement module 208 can then generate an audio reference for one or more of the detected objects. The audio reference generated for a given one of the detected objects can correspond to a classification which has been received for the object. As an illustration, where a classification of "dog" is received for an object, the audio tag placement module 208 can generate as an audio reference the spoken word "dog" or the sound of a barking dog.

In some embodiments, the audio tag placement module 208 can use a machine learning model to determine, for each of the detected objects, a location of the object within the environment. In these embodiments, for each of the detected objects, the audio tag placement module 208 can provide two inputs to the machine learning model. A first of the two inputs can be the classification which has been received for the object from the recognition module 104. A second of the two inputs can be the sparse 3D map representation of the environment. The audio tag placement module 208 can receive, as an output from the machine learning model, a location of the object within the environment. In some embodiments, the machine learning model can be a CNN machine learning model.

As discussed, in some embodiments alignment can be maintained between a 3D panorama associated with the environment, and the sparse 3D map representation of the environment. In these embodiments, the audio tag placement module 208 can find a portion of the 3D panorama which matches the image. Subsequently, the audio tag placement module 208 can align the image with the associated portion of the 3D panorama. As a result, objects of the image can become aligned with their associated portions of the sparse 3D map representation. Using the received indications of the locations of the detected objects within the image, the audio tag placement module 208 can determine, for each of the detected objects, the portion of the sparse 3D map representation which corresponds to the object. The audio tag placement module 208 can consider each object to be situated in the environment at the location of the portion of the sparse 3D map representation which corresponds to the object.

The audio tag placement module 208 can receive from the SLAM module 204 a current location and a current orientation of the user device in the environment. Further, the audio tag placement module 208 can, for each of the detected objects, provide information to the audio spatialization module 206. In particular, for a detected object, the audio tag placement module 208 can provide: (1) the location of the detected object; and (2) the current location and the current orientation of the user device. In reply, the audio tag placement module 208 can receive audio spatialization data for the detected object. The audio tag placement module 208 can then apply the received audio spatialization data to the audio reference for the object. Further, the audio tag placement module 208 can output, to headphones or another audio output of the user device, a result of the application of the audio spatialization data. As a result, the audio reference generated for the object can become an audio tag for the object. Due to the application of the audio spatialization data, the audio reference for the object can be heard by the user as if it were emitted from the location in the environment where the object is situated. As the user device is moved through the environment, the audio tag placement module 208 can provide the audio spatialization module 206 with updated location information for the user device. In reply, the audio tag placement module 208 can receive updated audio spatialization data. The audio tag placement module 208 can use the updated audio spatialization data to update the outputted audio for the objects. In this way, the audio reference for a given object, as heard by the user, can continue to be updated in a manner that is based on changes in relative distance and relative orientation between the object and the user device as the user device moves. As a result, the audio reference for an object can be heard by the user in a realistic fashion that accounts for distance or relative motion between the object and the user device.

As an illustration, suppose that the environment included a dog, a cat, and a tree. According to the discussed functionality, the audio tag placement module 208 can generate audio of a barking dog for the dog, audio of the spoken word "cat" for the cat, and audio of the spoken word "tree" for the tree. Further according to the discussed functionality, the sounds of the barking dog, the spoken word "cat," and the spoken word "tree" sound as if they are emitted by their respective objects in the environment.

**FIGURE** 3 illustrates an example audio AR interaction module 302, according to an embodiment of the present disclosure. In some embodiments, the audio AR interaction module 108 of **FIGURE 1** can be implemented as the example audio AR interaction module 302. As shown in **FIGURE 3**, the audio AR interaction module 302 can include a query module 304 and a speech module 306. The example audio AR interaction module 302 can allow users to access audio AR data in an interactive manner, for example, by asking questions and receiving corresponding answers.

The query module 304 can generate replies to questions posed by a user through a user device. The questions can relate to objects of an environment in which the user device is situated. In some embodiments, the query module 304 can use, in answering the questions, the one or more of the machine learning models discussed in connection with the recognition module 104. As discussed above, the audio tagging module 106 can cause audio tags to be placed for one or more objects of the environment which have been detected by the recognition module 104. The query module 304 receives questions from a user of the user device with respect to a detected object. In some embodiments, the user can be visually impaired. The question can seek a more detailed audio tag for the object. In some embodiments, these questions can be phrased in the form "What kind of X is it?" or "Who is the X?," where X corresponds to a current audio tag. For example, a more detailed audio tag for the bear might be requested via the question "What kind of bear is it?"

In response to a question of this form, the query module 304 can cause the recognition module 104 to provide, for the object which is referenced by the question, a classification. The classification can be returned by a machine learning model which is at a level of a cascade of machine learning models that is deeper than a level on which an original audio tag is based. Continuing with the illustration, the question "What kind of bear is it?" might result in a machine learning model at a deeper level of the cascade classifying the object as a "brown bear." Subsequently, the audio tagging module 106 can tag the object with the spoken phrase "brown bear."

The query module 304 can also allow the user to ask further questions regarding more-specifically classified objects. By doing so, the user can receive audio tags corresponding to classifications arising from still deeper levels of the cascade. Continuing with the illustration, the question "What kind of brown bear is it?" can result in a machine learning model at a deeper-still level of the cascade classifying the object as a "grizzly bear." Subsequently, the audio tagging module 106 can tag the object with the spoken phrase "grizzly bear."

In some embodiments, the one or more of the machine learning models discussed in connection with the recognition module 104 can further include one or more additional CNNs. A given one of the additional CNNs can accept, as input, both an image and a question. The CNN can generate, as output, a classification which takes into account both the image and the question. The classification can be an answer to the question. As such, providing, as input to the CNN, a given image and a first question can lead to a first output classification. Further as such, providing, as input to the CNN, the given image and a second question can lead to a second output classification. When a given one of the additional CNNs is used by the query module 304, a first input to the CNN can be an image accessed by the recognition module 104. A second input to the CNN can be a question posed by the user through the user device.

As an illustration, the query module 304 can provide a given image as a first input to a given one of the additional CNNs. Further, the query module 304 can provide, as a second input to the CNN, a question "What are you seeing?" The question can have been provided by the user through the user device. In response to the inputs, the CNN can return a classification of "market." The classification can be provided to the user as an answer to the question. Further according to the illustration, the query module 304 can again provide the image as a first input to the CNN. However, the query module 304 can provide, as a second input to the CNN, a question "What kind of market is it?" The question can have been provided by the user as a follow up question after receiving the answer of "market." In response to these inputs, the CNN can return a classification of "farmers' market." The classification can be provided to the user as answer to the question.

As discussed above in connection with the audio tag placement module 208, a CNN can be used to provide a location of an object within an environment. As just discussed, a CNN can be used to provide a classification which serves as an answer to an input question. In some embodiments, the functionalities discussed in connection with the two CNNs can be provided using a single CNN. In particular, the single CNN can accept three inputs. A first of the three inputs can be an image. A second of the three inputs can be a question. A third of the three inputs can be a sparse 3D map representation of the environment. In response to the three inputs, the CNN can generate two outputs. A first of the two outputs can be a classification which serves as an answer to the input question. A second of the two outputs can be a location within the environment of an object to which the classification corresponds. There can be many variations or other possibilities.

In some embodiments, the query module 304 can use a knowledge base in answering questions regarding detected objects. The knowledge base can be structured as a social graph or interlinked graph, such as a Resource Description Format-based (RDF-based) graph. As one example, the knowledge base can be DBpedia. As another example, the knowledge base can be a social graph of the social networking system. Many variations are possible.

For example, in some embodiments, a graph of the knowledge base can include nodes and edges. An edge connecting a first node to a second node can indicate a relationship between the two nodes. The nodes can correspond to nouns, verbs, and adjectives. Edges can specify a multitude of relationships. As examples, possible edge types might include "is a," "capable of," "used for," and "desires." As an example, a first node might be the word "bear," a second node might be the word "honey," and a "desires" edge might connect the two nodes. Specified by the example node-edge-node arrangement is that a "bear" "desires" "honey." In these embodiments, the query module 304 can allow a user of a user device to phrase questions in the form "Which object *E Y?"* In this question, E can specify one of the edge types, and *Y* can correspond to one of the nodes of the graph. As an illustration, the user might ask the question "Which object desires honey?" The query module 304 can respond to the question by accessing each audio tag in the environment, and attempting to determine which audio tag matches a node of the graph that satisfies the *E* and *Y* specified by the question. Continuing with the illustration, suppose that there were three audio tags in the environment: "bear," "monkey," and "car." The query module 304 can search the graph for nodes matching "bear," nodes matching "monkey," and nodes matching "car." For each of the matching nodes, the query module 304 can determine whether the node has a relationship to another node which satisfies the *E* ("desires") and *Y* ("honey") specified by the question. Accordingly, the query module 304 can determine that it is the audio tag "bear" which matches a node of the graph satisfying the *E* and *Y* of the question. The query module 304 can then return the audio tag "bear" as the answer to the question.

Further, in some embodiments, the query module 304 can allow the user to phrase questions in the form "What does *X E?"* In this question, *X* can correspond to an audio tag in the environment, and E can correspond to one of the edge types. As an illustration, the user might ask the question "What does the monkey desire?," where "monkey" is one of the current audio tags. In view of this question, the query module 304 can search the graph for a node which matches "monkey" and which includes the edge "desires." The query module 304 can then return, as the answer to the question, a node to which the edge leads. Continuing with the example, the query module 304 can find in the graph a node "monkey" which has a "desires" edge connecting to a node "bananas." Accordingly, the query module 304 can return "bananas" as the answer to the question. Also, in some embodiments, the query module 304 can utilize one or more further machine learning models in answering questions regarding objects of the environment. For example, a machine learning model can be trained to take, as input, an image of an environment and a question regarding objects in the environment. In this example, the machine learning model can provide, as output, an answer to the question. Many variations are possible. One or more machine learning models discussed in connection with the audio AR module 102 and its components can be implemented separately or in combination, for example, as a single machine learning model, as multiple machine learning models, as one or more staged machine learning models, as one or more combined machine learning models, etc.

The speech module 306 can utilize speech recognition, speech generation, and natural language processing (NLP) techniques to communicate with a user. The speech module 306 can receive questions discussed in connection with the query module 304. Subsequently, the speech module 306 can provide the questions to the query module 304 to be answered. The answers discussed in connection with the query module 304 can be provided from the query module 304 to the speech module 306. The speech module 306 can then speak the answers to the user. For instance, the speech module 306 can allow a user of a user device to request that objects of an environment in which the user device is situated receive audio tags. In one example, the user might be able to request tagging by asking a question such as "What is here?" or "What are you seeing?" In response, the recognition module 104 and the audio tagging module 106 recognizes objects, classifies objects, and places audio tags, as discussed. Further to the example, the speech module 306, in turn, can provide audio or verbal responses to the questions, such as "You are seeing a park." The speech module 306 can use a microphone or other audio input of the user device in receiving the spoken questions from the user. The speech module 306 can use headphones or another audio output of the user device to provide spoken answers to the user.

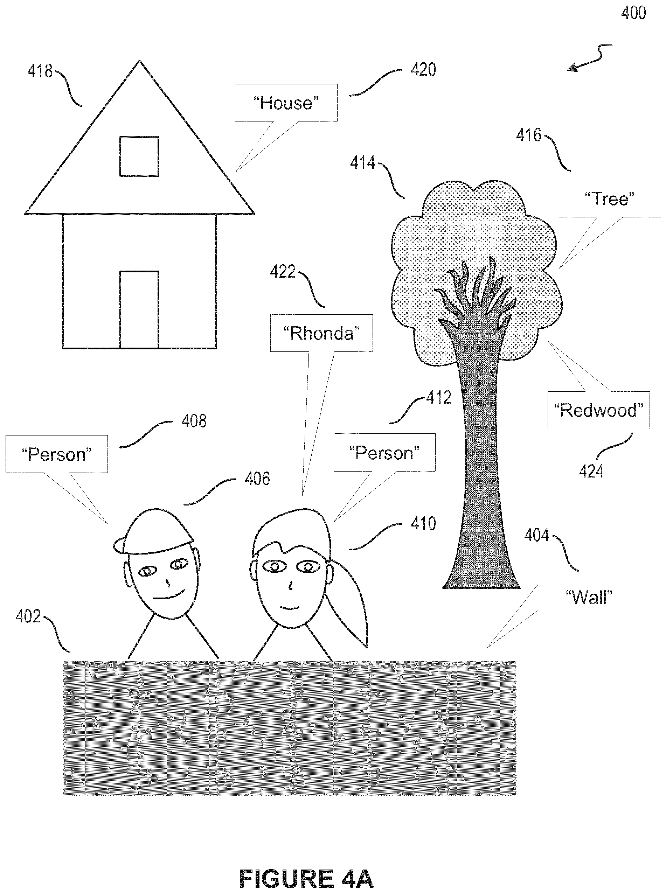

**FIGURE 4A** illustrates an example implementation 400, according to an embodiment of the present disclosure. Depicted in **FIGURE 4A** is an environment in which a user device is situated. Also situated in the environment are multiple objects. In particular, situated in the environment are a wall 402, a first person 406, a second person 410, a tree 414, and a house 418. A user of the user device might speak the question "What is here?" In view of the question, the audio AR module 102 can use one or more higher-level machine learning models of the cascade of the audio AR module 102 in placing audio tags for each of the objects. Consequently, the wall 402 can receive an audio tag 404. The audio tag 404 can be the spoken word "wall." The audio AR module places the audio tag 404 so that the user, utilizing headphones of the user device, perceives the word "wall" to be emanating from the location in the environment where the wall 404 is situated. Similarly, the first person 408 receives an audio tag 408 of the spoken word "person," and the second person 410 receives an audio tag of the spoken word "person." Likewise, the tree 414 receives an audio tag 416 of the spoken word "tree," and the house 418 receives an audio tag 420 of the spoken word "house." The audio AR module 102 places each of these audio tags such that it is perceived by the user as emanating from the location in the environment where its respective object is situated.

Subsequently, the user can speak the question "Who is the second person?" In view of the question, the audio AR module 102 can utilize a machine learning model which is at a deeper level of the machine learning model cascade in replacing the audio tag 412 with an audio tag 422. The audio tag 422 can provide the spoken word "Rhonda," where the name of the second person 410 is Rhonda. In some embodiments, the audio tag 422 is placed when the second person 410 is a connection (e.g., friend) of the user within a social networking system. In other embodiments, where the second person 410 is not a connection (e.g., a friend) of the user within the social networking system, the audio AR module 102 does not place the audio tag 422. As another example, the user can speak the question "What kind of tree is it?" In view of the question, the audio AR module 102 can utilize a machine learning model which is at a deeper level of the machine learning model cascade in replacing the audio tag 416 with an audio tag 424. The audio tag 424 can provide the spoken word "redwood," where the tree 414 is a redwood tree.

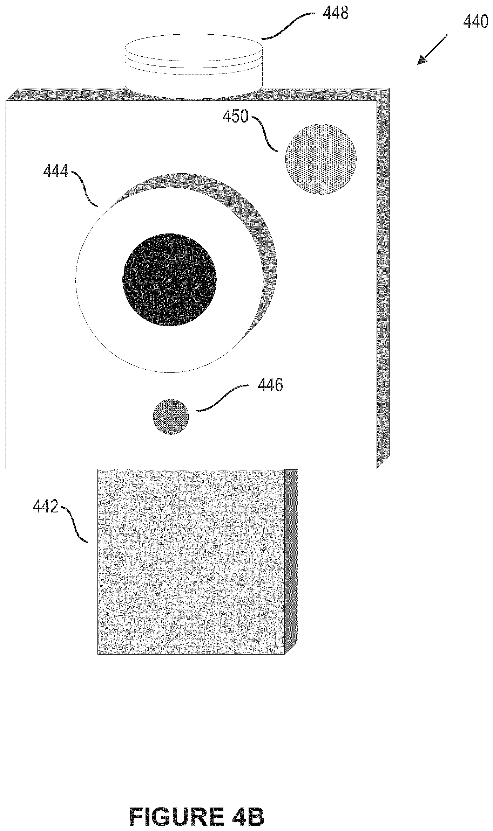

**FIGURE 4B** illustrates an example of a device 440 that may be used to implement one or more of the embodiments described herein in accordance with an embodiment of the invention. In some embodiments, the device 440 can be implemented as a user device 610, as discussed below. The device 440 can include computer components such as a processor, system memory, and mass storage. The mass storage can include computer-executable instructions for performing one or more of the operations discussed herein in connection with the audio AR module 102. The device 440 can include a mount 442. As an example, the mount 442 can be used to attach the device 440 to a helmet, a bicycle, or to a component of an apparatus. Many variations are possible. As depicted in **FIGURE 4B****,** the device 440 also can include a camera 444, a microphone 446, a button 448, and a speaker 450. The camera 444 can be used to capture images. The microphone 446 can be used to receive questions spoken by a user. The button 448 can be used to request placement of audio tags for objects. In some embodiments, the button 448 can be used to indicate to the device 440 that the user is speaking to ask a question about an environment. For example, the user can press the button 448 while speaking. The speaker 450 can, as an example, be used for providing spoken answers to questions.

In some embodiments, certain of the elements depicted in **FIGURE 4B** might not be present. As one example, the device 440 might include only one of the microphone 446 and the button 448. As another example, the mount 442 might not be present. Moreover, in other embodiments, other form factors might be used. For example, a headset form factor might be employed. Where a headset form factor is employed, certain of the functionality discussed herein may be performed by a smartphone or another user device paired with the headset. As another example, a glasses form factor might be employed. There can be many variations or other possibilities.

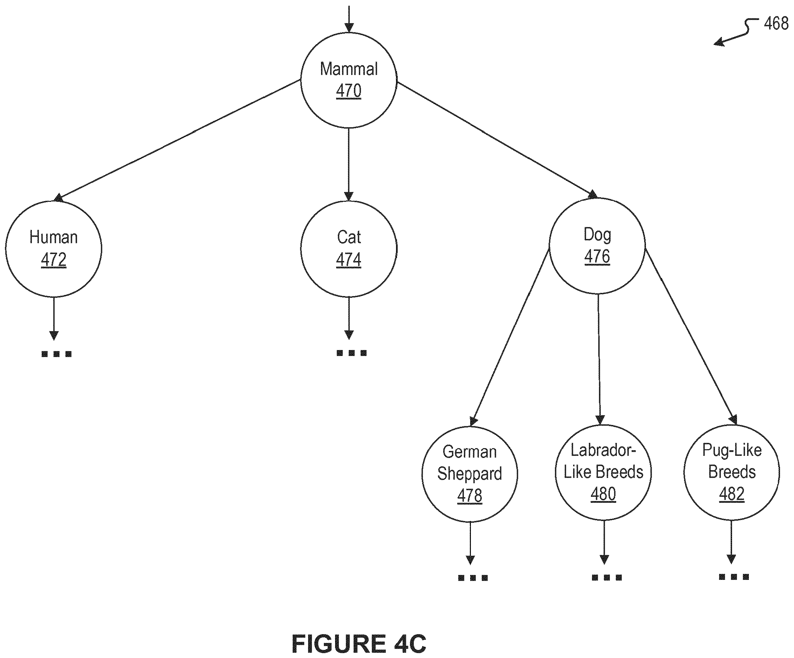

**FIGURE 4C** illustrates an example machine learning model cascade 468, according to an embodiment of the present disclosure. According to the example, a first machine learning model 470 at a first level of the cascade 468 can be capable of classifying an image as depicting one of three different kinds of mammals. In particular, the first machine learning model 470 can be capable of classifying an image as depicting either a human, a cat, or a dog. Further, a second machine learning model 472 at a second level of the cascade can be capable of classifying an image as depicting one of many different sorts of humans. A third machine learning model 474 at the second level of the cascade can be capable of classifying an image as depicting one of three different kinds of cats. A fourth machine learning model 476 at the second level of the cascade can be capable of classifying an image as depicting one of three different kinds of dog. Specifically, the machine learning model 476 can be cable of classifying an image as depicting either a German Sheppard, a Labrador-like breed, or a Pug-like breed. Then, each of machine learning models 478, 480, and 482 can, respectively, be capable of classifying an image as depicting one of different kinds of German Sheppard, different kinds of Labrador-like breeds, and different kinds of Pug-like breeds.

According to the example of **FIGURE 4C****,** an environment in which a user device is situated may include a dog. A user of the user device might ask the question "What are you seeing?" In view of the question, the audio AR module 102 can use a higher-level machine learning model (not shown) of the cascade of **FIGURE 4C** to classify the dog as a "mammal." The audio AR module 102 can also place a corresponding audio tag for the dog, such as the spoken word "mammal." Subsequently, the user of the user device can speak the question "What kind of mammal is it?" In view of the question, the audio AR module 102 can use the machine learning model 476 to classify the dog as a "dog." The audio AR module 102 can set a replacement audio tag for the dog, such as the spoken word "dog."

Later on, the user can speak the question "What kind of dog is it?" In view of the question, the audio AR module 102 can use the machine learning model 476 to classify the dog as a "Labrador-like breed." The audio AR module 102 can then set a replacement audio tag for the dog, such as the spoken phrase "Labrador-like breed." The user might not ask further questions regarding the dog. In such case, the audio AR module 102 does not utilize the machine learning model 480 to classify the dog. Many variations are possible.

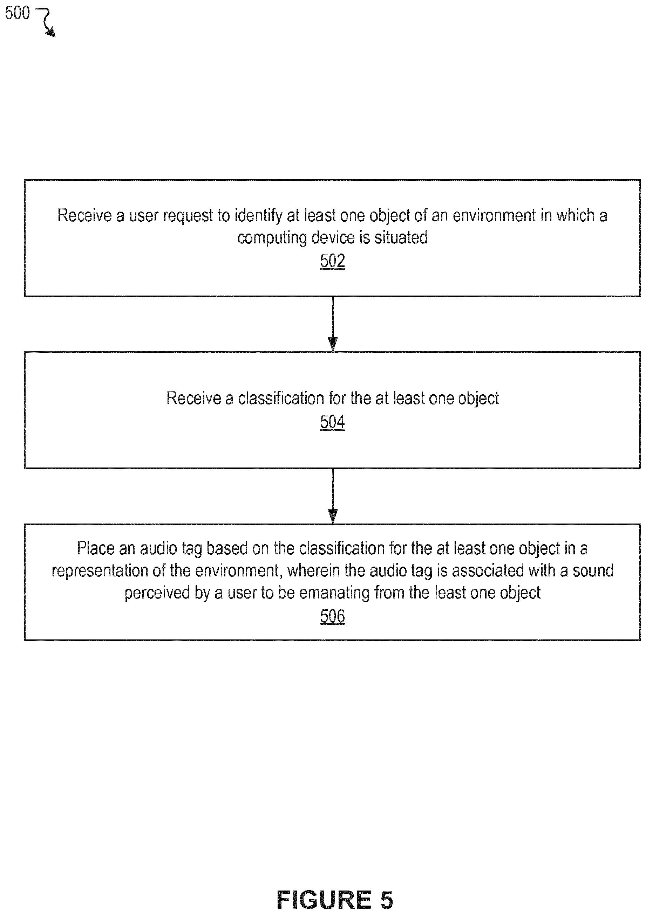

**FIGURE 5** illustrates an example partial process 500, according to various embodiments of the present disclosure. It should be appreciated that there are additional steps performed in similar or alternative orders, or in parallel, within the scope of the various embodiments according to the present invention discussed herein.

At block 502, the example partial process 500 receives a user request to identify at least one object of an environment in which a computing device is situated. At block 504, the process receives a classification for the at least one object. Then, at block 506, the process places an audio tag based on the classification for the at least one object in a representation of the environment, wherein the audio tag is associated with a sound perceived by a user to be emanating from the least one object.

It is contemplated that there can be many other uses, applications, and/or variations associated with the various embodiments of the present disclosure. For example, in some cases, user can choose whether or not to opt-in to utilize the disclosed technology. The disclosed technology can also ensure that various privacy settings and preferences are maintained and can prevent private information from being divulged. In another example, various embodiments of the present disclosure can learn, improve, and/or be refined over time.

### SOCIAL NETWORKING SYSTEM - EXAMPLE IMPLEMENTATION

**FIGURE 6** illustrates a network diagram of an example system 600 that can be utilized in various scenarios, in accordance with an embodiment of the present disclosure. The system 600 includes one or more user devices 610, one or more external systems 620, a social networking system (or service) 630, and a network 650. In an embodiment, the social networking service, provider, and/or system discussed in connection with the embodiments described above may be implemented as the social networking system 630. For purposes of illustration, the embodiment of the system 600, shown by **FIGURE 6****,** includes a single external system 620 and a single user device 610. However, in other embodiments, the system 600 may include more user devices 610 and/or more external systems 620. In certain embodiments, the social networking system 630 is operated by a social network provider, whereas the external systems 620 are separate from the social networking system 630 in that they may be operated by different entities. In various embodiments, however, the social networking system 630 and the external systems 620 operate in conjunction to provide social networking services to users (or members) of the social networking system 630. In this sense, the social networking system 630 provides a platform or backbone, which other systems, such as external systems 620, may use to provide social networking services and functionalities to users across the Internet.

The user device 610 comprises one or more computing devices (or systems) that can receive input from a user and transmit and receive data via the network 650. In one embodiment, the user device 610 is a conventional computer system executing, for example, a Microsoft Windows compatible operating system (OS), macOS, and/or a Linux distribution. In another embodiment, the user device 610 can be a computing device or a device having computer functionality, such as a smart-phone, a tablet, a personal digital assistant (PDA), a mobile telephone, a laptop computer, a wearable device (e.g., a pair of glasses, a watch, a bracelet, etc.), a camera, an appliance, etc. The user device 610 is configured to communicate via the network 650. The user device 610 can execute an application, for example, a browser application that allows a user of the user device 610 to interact with the social networking system 630. In another embodiment, the user device 610 interacts with the social networking system 630 through an application programming interface (API) provided by the native operating system of the user device 610, such as iOS and ANDROID. The user device 610 is configured to communicate with the external system 620 and the social networking system 630 via the network 650, which may comprise any combination of local area and/or wide area networks, using wired and/or wireless communication systems.

In one embodiment, the network 650 uses standard communications technologies and protocols. Thus, the network 650 can include links using technologies such as Ethernet, 802.11, worldwide interoperability for microwave access (WiMAX), 3G, 4G, CDMA, GSM, LTE, digital subscriber line (DSL), etc. Similarly, the networking protocols used on the network 650 can include multiprotocol label switching (MPLS), transmission control protocol/Internet protocol (TCP/IP), User Datagram Protocol (UDP), hypertext transport protocol (HTTP), simple mail transfer protocol (SMTP), file transfer protocol (FTP), and the like. The data exchanged over the network 650 can be represented using technologies and/or formats including hypertext markup language (HTML) and extensible markup language (XML). In addition, all or some links can be encrypted using conventional encryption technologies such as secure sockets layer (SSL), transport layer security (TLS), and Internet Protocol security (IPsec).

In one embodiment, the user device 610 may display content from the external system 620 and/or from the social networking system 630 by processing a markup language document 614 received from the external system 620 and from the social networking system 630 using a browser application 612. The markup language document 614 identifies content and one or more instructions describing formatting or presentation of the content. By executing the instructions included in the markup language document 614, the browser application 612 displays the identified content using the format or presentation described by the markup language document 614. For example, the markup language document 614 includes instructions for generating and displaying a web page having multiple frames that include text and/or image data retrieved from the external system 620 and the social networking system 630. In various embodiments, the markup language document 614 comprises a data file including extensible markup language (XML) data, extensible hypertext markup language (XHTML) data, or other markup language data. Additionally, the markup language document 614 may include JavaScript Object Notation (JSON) data, JSON with padding (JSONP), and JavaScript data to facilitate data-interchange between the external system 620 and the user device 610. The browser application 612 on the user device 610 may use a JavaScript compiler to decode the markup language document 614.

The markup language document 614 may also include, or link to, applications or application frameworks such as FLASH^{™} or Unity^{™} applications, the Silverlight^{™} application framework, etc.

In one embodiment, the user device 610 also includes one or more cookies 616 including data indicating whether a user of the user device 610 is logged into the social networking system 630, which may enable modification of the data communicated from the social networking system 630 to the user device 610.

The external system 620 includes one or more web servers that include one or more web pages 622a, 622b, which are communicated to the user device 610 using the network 650. The external system 620 is separate from the social networking system 630. For example, the external system 620 is associated with a first domain, while the social networking system 630 is associated with a separate social networking domain. Web pages 622a, 622b, included in the external system 620, comprise markup language documents 614 identifying content and including instructions specifying formatting or presentation of the identified content. As discussed previously, it should be appreciated that there can be many variations or other possibilities.

The social networking system 630 includes one or more computing devices for a social network, including a plurality of users, and providing users of the social network with the ability to communicate and interact with other users of the social network. In some instances, the social network can be represented by a graph, i.e., a data structure including edges and nodes. Other data structures can also be used to represent the social network, including but not limited to databases, objects, classes, meta elements, files, or any other data structure. The social networking system 630 may be administered, managed, or controlled by an operator. The operator of the social networking system 630 may be a human being, an automated application, or a series of applications for managing content, regulating policies, and collecting usage metrics within the social networking system 630. Any type of operator may be used.

Users may join the social networking system 630 and then add connections to any number of other users of the social networking system 630 to whom they desire to be connected. As used herein, the term "friend" refers to any other user of the social networking system 630 to whom a user has formed a connection, association, or relationship via the social networking system 630. For example, in an embodiment, if users in the social networking system 630 are represented as nodes in the social graph, the term "friend" can refer to an edge formed between and directly connecting two user nodes.

Connections may be added explicitly by a user or may be automatically created by the social networking system 630 based on common characteristics of the users (e.g., users who are alumni of the same educational institution). For example, a first user specifically selects an other user to be a friend. Connections in the social networking system 630 are usually in both directions, but need not be, so the terms "user" and "friend" depend on the frame of reference. Connections between users of the social networking system 630 are usually bilateral ("two-way"), or "mutual," but connections may also be unilateral, or "one-way." For example, if Bob and Joe are both users of the social networking system 630 and connected to each other, Bob and Joe are each other's connections. If, on the other hand, Bob wishes to connect to Joe to view data communicated to the social networking system 630 by Joe, but Joe does not wish to form a mutual connection, a unilateral connection may be established. The connection between users may be a direct connection; however, some embodiments of the social networking system 630 allow the connection to be indirect via one or more levels of connections or degrees of separation.

In addition to establishing and maintaining connections between users and allowing interactions between users, the social networking system 630 provides users with the ability to take actions on various types of items supported by the social networking system 630. These items may include groups or networks (i.e., social networks of people, entities, and concepts) to which users of the social networking system 630 may belong, events or calendar entries in which a user might be interested, computer-based applications that a user may use via the social networking system 630, transactions that allow users to buy or sell items via services provided by or through the social networking system 630, and interactions with advertisements that a user may perform on or off the social networking system 630. These are just a few examples of the items upon which a user may act on the social networking system 630, and many others are possible. A user may interact with anything that is capable of being represented in the social networking system 630 or in the external system 620, separate from the social networking system 630, or coupled to the social networking system 630 via the network 650.

The social networking system 630 is also capable of linking a variety of entities. For example, the social networking system 630 enables users to interact with each other as well as external systems 620 or other entities through an API, a web service, or other communication channels. The social networking system 630 generates and maintains the "social graph" comprising a plurality of nodes interconnected by a plurality of edges. Each node in the social graph may represent an entity that can act on another node and/or that can be acted on by another node. The social graph may include various types of nodes. Examples of types of nodes include users, non-person entities, content items, web pages, groups, activities, messages, concepts, and any other things that can be represented by an object in the social networking system 630. An edge between two nodes in the social graph may represent a particular kind of connection, or association, between the two nodes, which may result from node relationships or from an action that was performed by one of the nodes on the other node. In some cases, the edges between nodes can be weighted. The weight of an edge can represent an attribute associated with the edge, such as a strength of the connection or association between nodes. Different types of edges can be provided with different weights. For example, an edge created when one user "likes" another user may be given one weight, while an edge created when a user befriends another user may be given a different weight.

As an example, when a first user identifies a second user as a friend, an edge in the social graph is generated connecting a node representing the first user and a second node representing the second user. As various nodes relate or interact with each other, the social networking system 630 modifies edges connecting the various nodes to reflect the relationships and interactions.

The social networking system 630 also includes user-generated content, which enhances a user's interactions with the social networking system 630. User-generated content may include anything a user can add, upload, send, or "post" to the social networking system 630. For example, a user communicates posts to the social networking system 630 from a user device 610. Posts may include data such as status updates or other textual data, location information, images such as photos, videos, links, music, or other similar data and/or media. Content may also be added to the social networking system 630 by a third party. Content "items" are represented as objects in the social networking system 630. In this way, users of the social networking system 630 are encouraged to communicate with each other by posting text and content items of various types of media through various communication channels. Such communication increases the interaction of users with each other and increases the frequency with which users interact with the social networking system 630.

The social networking system 630 includes a web server 632, an API request server 634, a user profile store 636, a connection store 638, an action logger 640, an activity log 642, and an authorization server 644. In an embodiment of the invention, the social networking system 630 may include additional, fewer, or different components for various applications. Other components, such as network interfaces, security mechanisms, load balancers, failover servers, management and network operations consoles, and the like are not shown so as to not obscure the details of the system.

The user profile store 636 maintains information about user accounts, including biographic, demographic, and other types of descriptive information, such as work experience, educational history, hobbies or preferences, location, and the like that has been declared by users or inferred by the social networking system 630. This information is stored in the user profile store 636 such that each user is uniquely identified. The social networking system 630 also stores data describing one or more connections between different users in the connection store 638. The connection information may indicate users who have similar or common work experience, group memberships, hobbies, or educational history. Additionally, the social networking system 630 includes user-defined connections between different users, allowing users to specify their relationships with other users. For example, user-defined connections allow users to generate relationships with other users that parallel the users' real-life relationships, such as friends, co-workers, partners, and so forth. Users may select from predefined types of connections, or define their own connection types as needed. Connections with other nodes in the social networking system 630, such as non-person entities, buckets, cluster centers, images, interests, pages, external systems, concepts, and the like are also stored in the connection store 638.

The social networking system 630 maintains data about objects with which a user may interact. To maintain this data, the user profile store 636 and the connection store 638 store instances of the corresponding type of objects maintained by the social networking system 630. Each object type has information fields that are suitable for storing information appropriate to the type of object. For example, the user profile store 636 contains data structures with fields suitable for describing a user's account and information related to a user's account. When a new object of a particular type is created, the social networking system 630 initializes a new data structure of the corresponding type, assigns a unique object identifier to it, and begins to add data to the object as needed. This might occur, for example, when a user becomes a user of the social networking system 630, the social networking system 630 generates a new instance of a user profile in the user profile store 636, assigns a unique identifier to the user account, and begins to populate the fields of the user account with information provided by the user.

The connection store 638 includes data structures suitable for describing a user's connections to other users, connections to external systems 620 or connections to other entities. The connection store 638 may also associate a connection type with a user's connections, which may be used in conjunction with the user's privacy setting to regulate access to information about the user. In an embodiment of the invention, the user profile store 636 and the connection store 638 may be implemented as a federated database.

Data stored in the connection store 638, the user profile store 636, and the activity log 642 enables the social networking system 630 to generate the social graph that uses nodes to identify various objects and edges connecting nodes to identify relationships between different objects. For example, if a first user establishes a connection with a second user in the social networking system 630, user accounts of the first user and the second user from the user profile store 636 may act as nodes in the social graph. The connection between the first user and the second user stored by the connection store 638 is an edge between the nodes associated with the first user and the second user. Continuing this example, the second user may then send the first user a message within the social networking system 630. The action of sending the message, which may be stored, is another edge between the two nodes in the social graph representing the first user and the second user. Additionally, the message itself may be identified and included in the social graph as another node connected to the nodes representing the first user and the second user.

In another example, a first user may tag a second user in an image that is maintained by the social networking system 630 (or, alternatively, in an image maintained by another system outside of the social networking system 630). The image may itself be represented as a node in the social networking system 630. This tagging action may create edges between the first user and the second user as well as create an edge between each of the users and the image, which is also a node in the social graph. In yet another example, if a user confirms attending an event, the user and the event are nodes obtained from the user profile store 636, where the attendance of the event is an edge between the nodes that may be retrieved from the activity log 642. By generating and maintaining the social graph, the social networking system 630 includes data describing many different types of objects and the interactions and connections among those objects, providing a rich source of socially relevant information.

The web server 632 links the social networking system 630 to one or more user devices 610 and/or one or more external systems 620 via the network 650. The web server 632 serves web pages, as well as other web-related content, such as Java, JavaScript, Flash, XML, and so forth. The web server 632 may include a mail server or other messaging functionality for receiving and routing messages between the social networking system 630 and one or more user devices 610. The messages can be instant messages, queued messages (e.g., email), text and SMS messages, or any other suitable messaging format.

The API request server 634 allows one or more external systems 620 and user devices 610 to call access information from the social networking system 630 by calling one or more API functions. The API request server 634 may also allow external systems 620 to send information to the social networking system 630 by calling APIs. The external system 620, in one embodiment, sends an API request to the social networking system 630 via the network 650, and the API request server 634 receives the API request. The API request server 634 processes the request by calling an API associated with the API request to generate an appropriate response, which the API request server 634 communicates to the external system 620 via the network 650. For example, responsive to an API request, the API request server 634 collects data associated with a user, such as the user's connections that have logged into the external system 620, and communicates the collected data to the external system 620. In another embodiment, the user device 610 communicates with the social networking system 630 via APIs in the same manner as external systems 620.

The action logger 640 is capable of receiving communications from the web server 632 about user actions on and/or off the social networking system 630. The action logger 640 populates the activity log 642 with information about user actions, enabling the social networking system 630 to discover various actions taken by its users within the social networking system 630 and outside of the social networking system 630. Any action that a particular user takes with respect to another node on the social networking system 630 may be associated with each user's account, through information maintained in the activity log 642 or in a similar database or other data repository. Examples of actions taken by a user within the social networking system 630 that are identified and stored may include, for example, adding a connection to another user, sending a message to another user, reading a message from another user, viewing content associated with another user, attending an event posted by another user, posting an image, attempting to post an image, or other actions interacting with another user or another object. When a user takes an action within the social networking system 630, the action is recorded in the activity log 642. In one embodiment, the social networking system 630 maintains the activity log 642 as a database of entries. When an action is taken within the social networking system 630, an entry for the action is added to the activity log 642. The activity log 642 may be referred to as an action log.

Additionally, user actions may be associated with concepts and actions that occur within an entity outside of the social networking system 630, such as an external system 620 that is separate from the social networking system 630. For example, the action logger 640 may receive data describing a user's interaction with an external system 620 from the web server 632. In this example, the external system 620 reports a user's interaction according to structured actions and objects in the social graph.

Other examples of actions where a user interacts with an external system 620 include a user expressing an interest in an external system 620 or another entity, a user posting a comment to the social networking system 630 that discusses an external system 620 or a web page 622a within the external system 620, a user posting to the social networking system 630 a Uniform Resource Locator (URL) or other identifier associated with an external system 620, a user attending an event associated with an external system 620, or any other action by a user that is related to an external system 620. Thus, the activity log 642 may include actions describing interactions between a user of the social networking system 630 and an external system 620 that is separate from the social networking system 630.

The authorization server 644 enforces one or more privacy settings of the users of the social networking system 630. A privacy setting of a user determines how particular information associated with a user can be shared. The privacy setting comprises the specification of particular information associated with a user and the specification of the entity or entities with whom the information can be shared. Examples of entities with which information can be shared may include other users, applications, external systems 620, or any entity that can potentially access the information. The information that can be shared by a user comprises user account information, such as profile photos, phone numbers associated with the user, user's connections, actions taken by the user such as adding a connection, changing user profile information, and the like.

The privacy setting specification may be provided at different levels of granularity. For example, the privacy setting may identify specific information to be shared with other users; the privacy setting identifies a work phone number or a specific set of related information, such as, personal information including profile photo, home phone number, and status. Alternatively, the privacy setting may apply to all the information associated with the user. The specification of the set of entities that can access particular information can also be specified at various levels of granularity. Various sets of entities with which information can be shared may include, for example, all friends of the user, all friends of friends, all applications, or all external systems 620. One embodiment allows the specification of the set of entities to comprise an enumeration of entities. For example, the user may provide a list of external systems 620 that are allowed to access certain information. Another embodiment allows the specification to comprise a set of entities along with exceptions that are not allowed to access the information. For example, a user may allow all external systems 620 to access the user's work information, but specify a list of external systems 620 that are not allowed to access the work information. Certain embodiments call the list of exceptions that are not allowed to access certain information a "block list." External systems 620 belonging to a block list specified by a user are blocked from accessing the information specified in the privacy setting. Various combinations of granularity of specification of information, and granularity of specification of entities, with which information is shared are possible. For example, all personal information may be shared with friends whereas all work information may be shared with friends of friends.

The authorization server 644 contains logic to determine if certain information associated with a user can be accessed by a user's friends, external systems 620, and/or other applications and entities. The external system 620 may need authorization from the authorization server 644 to access the user's more private and sensitive information, such as the user's work phone number. Based on the user's privacy settings, the authorization server 644 determines if another user, the external system 620, an application, or another entity is allowed to access information associated with the user, including information about actions taken by the user.

In some embodiments, the social networking system 630 can include an audio AR module 646. The audio AR module 646 can, for example, be implemented as the audio AR module 102 of **FIGURE 1****.** In some embodiments, some or all of the functionality of the audio AR module 646 (e.g., sub modules of the audio AR module 102) instead can be implemented in the user device 610.

### HARDWARE IMPLEMENTATION

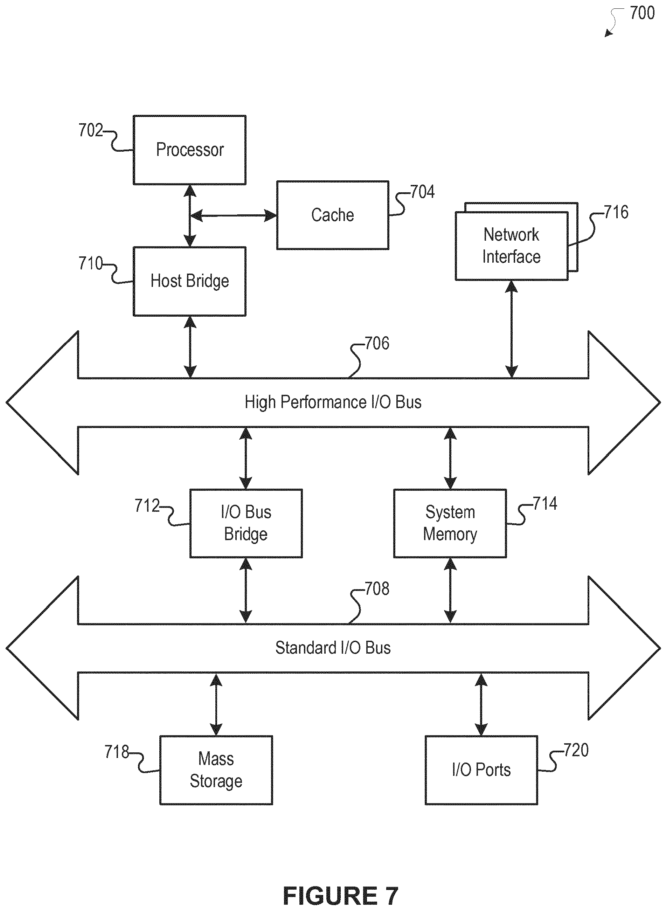

The foregoing processes and features can be implemented by a wide variety of machine and computer system architectures and in a wide variety of network and computing environments. **FIGURE 7** illustrates an example of a computer system 700 that may be used to implement one or more of the embodiments described herein in accordance with an embodiment of the invention. The computer system 700 includes sets of instructions for causing the computer system 700 to perform the processes and features discussed herein. The computer system 700 may be connected (e.g., networked) to other machines. In a networked deployment, the computer system 700 may operate in the capacity of a server machine or a client machine in a clientserver network environment, or as a peer machine in a peer-to-peer (or distributed) network environment. In an embodiment of the invention, the computer system 700 may be the social networking system 630, the user device 610, and the external system 720, or a component thereof. In an embodiment of the invention, the computer system 700 may be one server among many that constitutes all or part of the social networking system 630.

The computer system 700 includes a processor 702, a cache 704, and one or more executable modules and drivers, stored on a computer-readable medium, directed to the processes and features described herein. Additionally, the computer system 700 includes a high performance input/output (I/O) bus 706 and a standard I/O bus 708. A host bridge 710 couples processor 702 to high performance I/O bus 706, whereas I/O bus bridge 712 couples the two buses 706 and 708 to each other. A system memory 714 and one or more network interfaces 716 couple to high performance I/O bus 706. The computer system 700 may further include video memory and a display device coupled to the video memory (not shown). Mass storage 718 and I/O ports 720 couple to the standard I/O bus 708. The computer system 700 may optionally include a keyboard and pointing device, a display device, or other input/output devices (not shown) coupled to the standard I/O bus 708. Collectively, these elements are intended to represent a broad category of computer hardware systems, including but not limited to computer systems based on the x86-compatible processors manufactured by Intel Corporation of Santa Clara, California, and the x86-compatible processors manufactured by Advanced Micro Devices (AMD), Inc., of Sunnyvale, California, as well as any other suitable processor.

An operating system manages and controls the operation of the computer system 700, including the input and output of data to and from software applications (not shown). The operating system provides an interface between the software applications being executed on the system and the hardware components of the system. Any suitable operating system may be used, such as the LINUX Operating System, the Apple Macintosh Operating System, available from Apple Inc. of Cupertino, California, UNIX operating systems, Microsoft^{®} Windows^{®} operating systems, BSD operating systems, and the like. Other implementations are possible.

The elements of the computer system 700 are described in greater detail below. In particular, the network interface 716 provides communication between the computer system 700 and any of a wide range of networks, such as an Ethernet (e.g., IEEE 802.3) network, a backplane, etc. The mass storage 718 provides permanent storage for the data and programming instructions to perform the above-described processes and features implemented by the respective computing systems identified above, whereas the system memory 714 (e.g., DRAM) provides temporary storage for the data and programming instructions when executed by the processor 702. The I/O ports 720 may be one or more serial and/or parallel communication ports that provide communication between additional peripheral devices, which may be coupled to the computer system 700.

The computer system 700 may include a variety of system architectures, and various components of the computer system 700 may be rearranged. For example, the cache 704 may be on-chip with processor 702. Alternatively, the cache 704 and the processor 702 may be packed together as a "processor module," with processor 702 being referred to as the "processor core." Furthermore, certain embodiments of the invention may neither require nor include all of the above components. For example, peripheral devices coupled to the standard I/O bus 708 may couple to the high performance I/O bus 706. In addition, in some embodiments, only a single bus may exist, with the components of the computer system 700 being coupled to the single bus. Moreover, the computer system 700 may include additional components, such as additional processors, storage devices, or memories.

In general, the processes and features described herein may be implemented as part of an operating system or a specific application, component, program, object, module, or series of instructions referred to as "programs." For example, one or more programs may be used to execute specific processes described herein. The programs typically comprise one or more instructions in various memory and storage devices in the computer system 700 that, when read and executed by one or more processors, cause the computer system 700 to perform operations to execute the processes and features described herein. The processes and features described herein may be implemented in software, firmware, hardware (e.g., an application specific integrated circuit), or any combination thereof.

In one implementation, the processes and features described herein are implemented as a series of executable modules run by the computer system 700, individually or collectively in a distributed computing environment. The foregoing modules may be realized by hardware, executable modules stored on a computer-readable medium (or machine-readable medium), or a combination of both. For example, the modules may comprise a plurality or series of instructions to be executed by a processor in a hardware system, such as the processor 702. Initially, the series of instructions may be stored on a storage device, such as the mass storage 718. However, the series of instructions can be stored on any suitable computer readable storage medium. Furthermore, the series of instructions need not be stored locally, and could be received from a remote storage device, such as a server on a network, via the network interface 716. The instructions are copied from the storage device, such as the mass storage 718, into the system memory 714 and then accessed and executed by the processor 702. In various implementations, a module or modules can be executed by a processor or multiple processors in one or multiple locations, such as multiple servers in a parallel processing environment.

Examples of computer-readable media include, but are not limited to, recordable type media such as volatile and non-volatile memory devices; solid state memories; floppy and other removable disks; hard disk drives; magnetic media; optical disks (e.g., Compact Disk Read-Only Memory (CD ROMS), Digital Versatile Disks (DVDs)); other similar non-transitory (or transitory), tangible (or non-tangible) storage medium; or any type of medium suitable for storing, encoding, or carrying a series of instructions for execution by the computer system 700 to perform any one or more of the processes and features described herein.

For purposes of explanation, numerous specific details are set forth in order to provide a thorough understanding of the description. It will be apparent, however, to one skilled in the art that embodiments of the disclosure can be practiced without these specific details. In some instances, modules, structures, processes, features, and devices are shown in block diagram form in order to avoid obscuring the description. In other instances, functional block diagrams and flow diagrams are shown to represent data and logic flows. The components of block diagrams and flow diagrams (e.g., modules, blocks, structures, devices, features, etc.) may be variously combined, separated, removed, reordered, and replaced in a manner other than as expressly described and depicted herein.

Reference in this specification to "one embodiment," "an embodiment," "other embodiments," "one series of embodiments," "some embodiments," "various embodiments," or the like means that a particular feature, design, structure, or characteristic described in connection with the embodiment is included in at least one embodiment of the disclosure. The appearances of, for example, the phrase "in one embodiment" or "in an embodiment" in various places in the specification are not necessarily all referring to the same embodiment, nor are separate or alternative embodiments mutually exclusive of other embodiments. Moreover, whether or not there is express reference to an "embodiment" or the like, various features are described, which may be variously combined and included in some embodiments, but also variously omitted in other embodiments. Similarly, various features are described that may be preferences or requirements for some embodiments, but not other embodiments.

## Claims

1. A computer-implemented method comprising:
receiving, by a computing device, a user request to identify at least one object of an environment in which the computing device is situated;
receiving, by the computing device, a classification for the at least one object;
placing, by the computing device, an audio tag (404, 408, 416, 420) based on the classification for the at least one object in a representation of the environment, wherein the audio tag (404, 408, 416, 420) is associated with a sound perceived by a user to be emanating from the at least one object;
**characterised in that** the method further comprises:
receiving, by an audio AR interaction module (108) of the computing device, a spoken question regarding the at least one object of the environment;
generating, by the computing device, an answer to the question based on one or more of a cascade of machine learning models or a knowledge base graph; and
based on the answer, replacing the audio tag by a second audio tag, wherein the second audio tag is associated with a sound perceived by a user to be emanating from the at least one object.

2. The computer-implemented method of claim 1, further comprising:
generating, by the computing device, the sound perceived by the user based on a location and an orientation of the user device.

3. The computer-implemented method of claim 1 or 2, further comprising:
modeling, by the computing device, sound wave propagation within the representation of the environment in which the computing device is situated; and
generating, by the computing device, audio spatialization data based on the modeling of the sound wave propagation.

4. The computer-implemented method of claim 3, further comprising:
generating, by the computing device, the sound perceived by the user based on the audio spatialization data.

5. The computer-implemented method of any of claims 1 to 4, further comprising:
receiving, by the computing device, one or more captured images of the environment in which the computing device is situated;
receiving, by the computing device, sensor data from one or more sensors of the computing device; and
generating, by the computing device, the representation of the environment in which the computing device is situated based on the one or more captured images and the sensor data.

6. The computer-implemented method of claim 5, wherein the one or more sensors include one or more of accelerometers, gyroscopes, or magnetometers.

7. The computer-implemented method of claim 5 or 6, wherein the representation of the environment in which the computing device is situated is a sparse three-dimensional map representation.

8. The computer-implemented method of any of claims 1 to 7, further comprising:
tracking, by the computing device, a location of the computing device within the environment in which the computing device is situated.

9. The computer-implemented method of any of claims 1 to 8, wherein the receiving a classification for the at least one object further comprises:
accessing, by the computing device, one or more machine learning models of a cascade of machine learning models.

10. A system comprising:
at least one processor; and
a memory storing instructions that, when executed by the at least one processor, cause the system to perform a method according to any of claims 1 to 9 or to perform:
receiving a user request to identify at least one object of an environment in which the system is situated;
receiving a classification for the at least one object;
placing an audio tag (404, 408, 416, 420) based on the classification for the at least one object in a representation of the environment, wherein the audio tag (404, 408, 416, 420) is associated with a sound perceived by a user to be emanating from the at least one object;
receiving, by an audio AR interaction module (108) of the system, a spoken question regarding the at least one object of the environment;
generating an answer to the question based on one or more of a cascade of machine learning models or a knowledge base graph; and
based on the answer, replacing the audio tag by a second audio tag, wherein the second audio tag is associated with a sound perceived by a user to be emanating from the at least one object.

11. A non-transitory computer-readable storage medium including instructions that, when executed by at least one processor of a computing system, cause the computing system to perform a method according to any of claims 1 to 9 or to perform:
a method comprising:
receiving a user request to identify at least one object of an environment in which the computing system is situated;
receiving a classification for the at least one object;
placing an audio tag (404, 408, 416, 420) based on the classification for the at least one object in a representation of the environment, wherein the audio tag (404, 408, 416, 420) is associated with a sound perceived by a user to be emanating from the at least one object;
receiving, by an audio AR interaction module (108) of the system, a spoken question regarding the at least one object of the environment;
generating an answer to the question based on one or more of a cascade of machine learning models or a knowledge base graph; and
based on the answer, replacing the audio tag by a second audio tag, wherein the second audio tag is associated with a sound perceived by a user to be emanating from the at least one object.

## Patentansprüche

1. Ein computerimplementiertes Verfahren, das Folgendes beinhaltet:
Empfangen, durch eine Rechenvorrichtung, einer Benutzeranfrage, um mindestens ein Objekt einer Umgebung zu identifizieren, in der die Rechenvorrichtung gelegen ist;
Empfangen, durch die Rechenvorrichtung, einer Klassifizierung für das mindestens eine Objekt;
Platzieren, durch die Rechenvorrichtung, eines Audiotags (404, 408, 416, 420) basierend auf der Klassifizierung für das mindestens eine Objekt in einer Darstellung der Umgebung, wobei der Audiotag (404, 408, 416, 420) mit einem Schall assoziiert ist, der durch einen Benutzer als von dem mindestens einen Objekt hervorgehend wahrgenommen wird;
**dadurch gekennzeichnet, dass** das Verfahren ferner Folgendes beinhaltet:
Empfangen, durch ein Audio-AR-Interaktionsmodul (108) der Rechenvorrichtung, einer gesprochenen Frage, die sich auf das mindestens eine Objekt der Umgebung bezieht;
Erzeugen, durch die Rechenvorrichtung, einer Antwort auf die Frage basierend auf einem oder mehreren einer Kaskade von maschinellen Lernmodellen oder einem Wissensbasisgraph; und
basierend auf der Antwort, Ersetzen des Audiotags durch einen zweiten Audiotag, wobei der zweite Audiotag mit einem Schall assoziiert ist, der durch einen Benutzer als von dem mindestens einen Objekt hervorgehend wahrgenommen wird.

2. Computerimplementiertes Verfahren gemäß Anspruch 1, das ferner Folgendes beinhaltet:
Erzeugen, durch die Rechenvorrichtung, des Schalls, der durch den Benutzer wahrgenommen wird, basierend auf einer Lage und einer Ausrichtung der Benutzervorrichtung.

3. Computerimplementiertes Verfahren gemäß Anspruch 1 oder 2, das ferner Folgendes beinhaltet:
Modellieren, durch die Rechenvorrichtung, von Schallwellenausbreitung innerhalb der Darstellung der Umgebung, in der die Rechenvorrichtung gelegen ist; und
Erzeugen, durch die Rechenvorrichtung, von Audioverräumlichungsdaten basierend auf dem Modellieren der Schallwellenausbreitung.

4. Computerimplementiertes Verfahren gemäß Anspruch 3, das ferner Folgendes beinhaltet:
Erzeugen, durch die Rechenvorrichtung, des Schalls, der durch den Benutzer wahrgenommen wird, basierend auf den Audioverräumlichungsdaten.

5. Computerimplementiertes Verfahren gemäß einem der Ansprüche 1 bis 4, das ferner Folgendes beinhaltet:
Empfangen, durch die Rechenvorrichtung, von einem oder mehreren erfassten Bildern der Umgebung, in der die Rechenvorrichtung gelegen ist;
Empfangen, durch die Rechenvorrichtung, von Sensordaten von einem oder mehreren Sensoren der Rechenvorrichtung; und
Erzeugen, durch die Rechenvorrichtung, der Darstellung der Umgebung, in der die Rechenvorrichtung gelegen ist, basierend auf dem einen oder den mehreren erfassten Bildern und den Sensordaten.

6. Computerimplementiertes Verfahren gemäß Anspruch 5, wobei der eine oder die mehreren Sensoren eines oder mehrere von Beschleunigungsmessern, Gyroskopen oder Magnetometern umfassen.

7. Computerimplementiertes Verfahren gemäß Anspruch 5 oder 6, wobei die Darstellung der Umgebung, in der die Rechenvorrichtung gelegen ist, eine dreidimensionale Kartendarstellung geringer Dichte ist.

8. Computerimplementiertes Verfahren gemäß einem der Ansprüche 1 bis 7, das ferner Folgendes beinhaltet:
Verfolgen, durch die Rechenvorrichtung, einer Lage der Rechenvorrichtung innerhalb der Umgebung, in der die Rechenvorrichtung gelegen ist.

9. Computerimplementiertes Verfahren gemäß einem der Ansprüche 1 bis 8, wobei das Empfangen einer Klassifizierung für das mindestens eine Objekt ferner Folgendes beinhaltet:
Zugreifen, durch die Rechenvorrichtung, auf ein oder mehrere maschinelle Lernmodelle einer Kaskade von maschinellen Lernmodellen.

10. Ein System, das Folgendes beinhaltet:
mindestens einen Prozessor; und
einen Speicher, der Anweisungen speichert, die, wenn sie durch den mindestens einen Prozessor ausgeführt werden, bewirken, dass das System ein Verfahren gemäß einem der Ansprüche 1 bis 9 durchführt oder Folgendes durchführt:
Empfangen einer Benutzeranfrage, um mindestens ein Objekt einer Umgebung zu identifizieren, in der das System gelegen ist;
Empfangen einer Klassifizierung für das mindestens eine Objekt;
Platzieren eines Audiotags (404, 408, 416, 420) basierend auf der Klassifizierung für das mindestens eine Objekt in einer Darstellung der Umgebung, wobei der Audiotag (404, 408, 416, 420) mit einem Schall assoziiert ist, der durch einen Benutzer als von dem mindestens einen Objekt hervorgehend wahrgenommen wird;
Empfangen, durch ein Audio-AR-Interaktionsmodul (108) des Systems, einer gesprochenen Frage, die sich auf das mindestens eine Objekt der Umgebung bezieht;
Erzeugen einer Antwort auf die Frage basierend auf einem oder mehreren einer Kaskade von maschinellen Lernmodellen oder einem Wissensbasisgraph; und
basierend auf der Antwort, Ersetzen des Audiotags durch einen zweiten Audiotag, wobei der zweite Audiotag mit einem Schall assoziiert ist, der durch einen Benutzer als von dem mindestens einen Objekt hervorgehend wahrgenommen wird.

11. Ein nicht-transitorisches, computerlesbares Speichermedium, das Anweisungen umfasst, die, wenn sie durch mindestens einen Prozessor einer Rechenvorrichtung ausgeführt werden, bewirken, dass das Rechensystem ein Verfahren gemäß einem der Ansprüche 1 bis 9 durchführt oder Folgendes durchführt:
ein Verfahren, das Folgendes beinhaltet:
Empfangen einer Benutzeranfrage, um mindestens ein Objekt einer Umgebung zu identifizieren, in der die Rechenvorrichtung gelegen ist;
Empfangen einer Klassifizierung für das mindestens eine Objekt;
Platzieren eines Audiotags (404, 408, 416, 420) basierend auf der Klassifizierung für das mindestens eine Objekt in einer Darstellung der Umgebung, wobei der Audiotag (404, 408, 416, 420) mit einem Schall assoziiert ist, der durch einen Benutzer als von dem mindestens einen Objekt hervorgehend wahrgenommen wird;
Empfangen, durch ein Audio-AR-Interaktionsmodul (108) der Rechenvorrichtung, einer gesprochenen Frage, die sich auf das mindestens eine Objekt der Umgebung bezieht;
Erzeugen einer Antwort auf die Frage basierend auf einem oder mehreren einer Kaskade von maschinellen Lernmodellen oder einem Wissensbasisgraph; und
basierend auf der Antwort, Ersetzen des Audiotags durch einen zweiten Audiotag, wobei der zweite Audiotag mit einem Schall assoziiert ist, der durch einen Benutzer als von dem mindestens einen Objekt hervorgehend wahrgenommen wird.

## Revendications

1. Un procédé mis en œuvre par ordinateur comprenant :
la réception, par un dispositif informatique, d'une demande de l'utilisateur afin d'identifier au moins un objet d'un environnement dans lequel le dispositif informatique est situé ;
la réception, par le dispositif informatique, d'une classification pour l'au moins un objet ;
le placement, par le dispositif informatique, d'une étiquette audio (404, 408, 416, 420) sur la base de la classification pour l'au moins un objet dans une représentation de l'environnement, l'étiquette audio (404, 408, 416, 420) étant associée à un son perçu par un utilisateur comme émanant de l'au moins un objet ;
**caractérisé en ce que** le procédé comprend en outre :
la réception, par un module d'interaction RA audio (108) du dispositif informatique, d'une question vocale concernant l'au moins un objet de l'environnement ;
la génération, par le dispositif informatique, d'une réponse à la question sur la base d'un ou de plusieurs éléments parmi une cascade de modèles d'apprentissage machine et un graphique à base de connaissance ; et
sur la base de la réponse, le remplacement de l'étiquette audio par une deuxième étiquette audio, la deuxième étiquette audio étant associée à un son perçu par un utilisateur comme émanant de l'au moins un objet.

2. Le procédé mis en œuvre par ordinateur de la revendication 1, comprenant en outre :
la génération, par le dispositif informatique, du son perçu par l'utilisateur sur la base d'un emplacement et d'une orientation du dispositif utilisateur.

3. Le procédé mis en œuvre par ordinateur de la revendication 1 ou de la revendication 2, comprenant en outre :
la modélisation, par le dispositif informatique, d'une propagation d'onde sonore au sein de la représentation de l'environnement dans lequel le dispositif informatique est situé ; et
la génération, par le dispositif informatique, de données de spatialisation audio sur la base de la modélisation de la propagation d'onde sonore.

4. Le procédé mis en œuvre par ordinateur de la revendication 3, comprenant en outre :
la génération, par le dispositif informatique, du son perçu par l'utilisateur sur la base des données de spatialisation audio.

5. Le procédé mis en œuvre par ordinateur de n'importe lesquelles des revendications 1 à 4, comprenant en outre :
la réception, par le dispositif informatique, d'une ou de plusieurs images saisies de l'environnement dans lequel le dispositif informatique est situé ;
la réception, par le dispositif informatique, de données de capteur provenant d'un ou de plusieurs capteurs du dispositif informatique ; et
la génération, par le dispositif informatique, de la représentation de l'environnement dans lequel le dispositif informatique est situé sur la base des une ou plusieurs images saisies et des données de capteur.

6. Le procédé mis en œuvre par ordinateur de la revendication 5, dans lequel les un ou plusieurs capteurs incluent un ou plusieurs éléments parmi des accéléromètres, des gyroscopes, ou des magnétomètres.

7. Le procédé mis en œuvre par ordinateur de la revendication 5 ou de la revendication 6, dans lequel la représentation de l'environnement dans lequel le dispositif informatique est situé est une représentation de carte tridimensionnelle incomplète.

8. Le procédé mis en œuvre par ordinateur de n'importe lesquelles des revendications 1 à 7, comprenant en outre :
le suivi, par le dispositif informatique, d'un emplacement du dispositif informatique au sein de l'environnement dans lequel le dispositif informatique est situé.

9. Le procédé mis en œuvre par ordinateur de n'importe lesquelles des revendications 1 à 8, dans lequel la réception d'une classification pour l'au moins un objet comprend en outre :
l'accès, par le dispositif informatique, à un ou plusieurs modèles d'apprentissage machine d'une cascade de modèles d'apprentissage machine.

10. Un système comprenant:
au moins un processeur ; et
une mémoire stockant des instructions qui, lorsqu'elles sont exécutées par l'au moins un processeur, amène le système à mettre en œuvre un procédé selon n'importe lesquelles des revendications 1 à 9 ou à mettre en œuvre :
la réception d'une demande de l'utilisateur afin d'identifier au moins un objet d'un environnement dans lequel le système est situé ;
la réception d'une classification pour l'au moins un objet ;
le placement d'une étiquette audio (404, 408, 416, 420) sur la base de la classification pour l'au moins un objet dans une représentation de l'environnement, l'étiquette audio (404, 408, 416, 420) étant associée à un son perçu par un utilisateur comme émanant de l'au moins un objet ;
la réception, par un module d'interaction RA audio (108) du système, d'une question vocale concernant l'au moins un objet de l'environnement ;
la génération d'une réponse à la question sur la base d'un ou de plusieurs éléments parmi une cascade de modèles d'apprentissage machine et un graphique à base de connaissance ; et
sur la base de la réponse, le remplacement de l'étiquette audio par une deuxième étiquette audio, la deuxième étiquette audio étant associée à un son perçu par un utilisateur comme émanant de l'au moins un objet.

11. Un support de stockage non transitoire lisible par ordinateur incluant des instructions qui, lorsqu'elles sont exécutées par au moins un processeur d'un système informatique, amènent le système informatique à mettre en œuvre un procédé selon n'importe lesquelles des revendications 1 à 9 ou à mettre en œuvre :
un procédé comprenant :
la réception d'une demande de l'utilisateur afin d'identifier au moins un objet d'un environnement dans lequel le système informatique est situé ;
la réception d'une classification pour l'au moins un objet ;
le placement d'une étiquette audio (404, 408, 416, 420) sur la base de la classification pour l'au moins un objet dans une représentation de l'environnement, l'étiquette audio (404, 408, 416, 420) étant associée à un son perçu par un utilisateur comme émanant de l'au moins un objet ;
la réception, par un module d'interaction RA audio (108) du système, d'une question vocale concernant l'au moins un objet de l'environnement ;
la génération d'une réponse à la question sur la base d'un ou de plusieurs éléments parmi une cascade de modèles d'apprentissage machine et un graphique à base de connaissance ; et
sur la base de la réponse, le remplacement de l'étiquette audio par une deuxième étiquette audio, la deuxième étiquette audio étant associée à un son perçu par un utilisateur comme émanant de l'au moins un objet.
